# EUROPEAN PATENT APPLICATION

(11) **EP 4 844 457 A1**
(43) Date of publication of application: **25.11.2026**
(21) Application number: 25857957.2
(22) Date of filing: 19.09.2025
(51) Int. Cl.: G02B 5/128

(54) **MULTILAYER STRUCTURED REFLECTIVE SHEET**

(30) Priority: 29.10.2024 CN 202411524699
(71) Applicant: Nippon Carbide Industries (Hangzhou) Co., Ltd., Hangzhou, Zhejiang 311231 (CN)
(72) Inventor: JIANG, Jihui, Hangzhou, Zhejiang 311231 (CN); XIAO, Yuetang, Hangzhou, Zhejiang 311231 (CN); GONG, Yeping, Hangzhou, Zhejiang 311231 (CN); WANG, Yalin, Hangzhou, Zhejiang 311231 (CN)
(74) Representative: Hoefer & Partner Patentanwälte mbB
(86) International application number: PCT/CN2025/122603
(87) International publication number: WO 2026/091966

(57) **Abstract**

Provided is a multilayer-structured reflective sheet, sequentially comprising, from top to bottom, the following structural layers: a transparent protective layer (1), a transparent resin layer (2), a retroreflective structural layer (3), a focus-forming layer (4), and a metal reflective layer (5), wherein the retroreflective structural layer (3) is a lens array layer formed of light-transmitting microbeads or prisms, and the lens array layer is at least partially embedded into the focus-forming layer (4); and the metal reflective layer (5) has a thickness of 0.5 to 100 µm, the metal reflective layer (5) comprises a metallic material and a resin, and the metallic material comprises one or more of zero-dimensional metallic particles and two-dimensional metallic particles. By adjusting the thickness of the metal reflective layer (5) and the shape and content of its metallic particles, the metal reflective layer (5) is enabled not to shield signals, which broadens the range of applications.

## Description

### TECHNICAL FIELD

The present invention relates to a multilayer-structured reflective sheet, and belongs to the technical field of reflective film.

### BACKGROUND

It has been a longstanding and common practice in various countries to use license plates for identifying motor vehicles and some non-motor vehicles to facilitate various standardized management.

In some countries and regions, there has been a trend toward or the actual practice of embedding RFID chips in license plates, such as license plates for non-motor vehicles (electric bicycles) and temporary license plates for motor vehicles. Traffic violations caused by electric bicycles and temporary license plates are becoming increasingly serious, which significantly impacts public travel safety. The major reason behind this is that temporary license plates are merely paper sheets affixed to the front and rear windshields of vehicles and some vehicle owners even have not affixed them.

While electric bicycles are fitted with plastic license plates containing a RFID chip, the plastic license plates lack reflective function. When captured by roadside cameras at night, these plastic license plates are unrecognizable due to a poor contrast between the numbers and the background color. Without valid evidence such as photos, it is impossible to take further actions or enforce regulations against violators.

Cited Literature 1 discloses a reflective film capable of allowing the penetration electronic signals, comprising a surface layer, an adhesive layer, a titanium dioxide layer, and a pressure-sensitive adhesive layer which are sequentially arranged from top to bottom, wherein a glass microbead layer is embedded in the adhesive layer, the glass microbead layer includes several flatly-laid glass microbeads, the bottom surface of the adhesive layer is provided with spherical convex surfaces whose number and position are in one-to-one correspondence with those of the glass microbeads, and the top surface of the titanium dioxide layer is provided with spherical concave surfaces each fitted and connected to the spherical convex surfaces. The reflective film of Cited Literature 1 mainly creates an interface between the titanium dioxide layer and the glass microbeads, and light is reflected at the interface. In this way, the reflective film has reflective properties in the absence of an aluminum-plated layer, and the titanium dioxide layer does not shield signals, thereby broadening the range of application.

Cited Literature 2 discloses a reflective film for vehicle license plate and a vehicle license plate. The reflective film for vehicle license plate comprises a surface layer, a bead planting adhesive layer, a glass microbead layer, a focusing layer, and a reflective layer which are sequentially laminated and provided, wherein the reflective layer is a non-signal-shielding layer or a low-signal-shielding layer. In the reflective film for vehicle license plate in the above technical solution, the reflective layer has better reflective effect, enabling the vehicle license plate to be better identified under insufficient light conditions; and in the meantime, the reflective layer in the reflective film for vehicle license plate in the above technical solution is a non-signal-shielding layer or a low-signal-shielding layer, which could avoid causing the signal shielding of the chip within the vehicle license plate, thus facilitating widespread applications.

Although studies on reflective license plates with a signal transmission function have already been conducted to some extent in the above prior arts, the current license plates for identifying motor or non-motor vehicles still need to be improved in terms of balancing the signal transmission properties, reflective properties, and ease of manufacturing.

### Cited Literatures:

Cited Literature 1: CN218446057U
Cited Literature 2: CN219162416U

### SUMMARY

### Technical Problems to be solved by the Invention

Although studies on reflective license plates with a signal transmission function have already been conducted to some extent in the prior arts as previously described, there still remain shortcomings in providing improved clarity of reflection and contrast while providing better signal penetrability.

Furthermore, the application of intelligent driving systems in current passenger vehicles is becoming increasingly widespread, wherein the millimeter-wave radar is widely used as a key component. However, metals will in turn significantly affect the performance of the millimeter-wave radar.

The technical problem to be solved by the present invention is how to allow for clear contrast between the background color and the numbers of the vehicle license plate and enable ease and immediate identification after capture in case of for example road capture without affecting the penetration of RFID signals and millimeter-wave radar signals, while avoiding interference with vehicle navigation or intelligent driving when used as an automotive decoration.

### Solution to the Problems

After extensive studies, it has been found that the above technical problems could be resolved by implementing the following technical solutions.
[1]. The present invention firstly provides a multilayer-structured reflective sheet, wherein the reflective sheet sequentially comprises, from top to bottom, the following structural layers:
   a transparent protective layer, a transparent resin layer, a retroreflective structural layer, a focus-forming layer, and a metal reflective layer,
   the retroreflective structural layer is a lens array layer formed of light-transmitting microbeads or prisms, and the lens array layer is at least partially embedded into the focus-forming layer; and
   the metal reflective layer has a thickness of 0.5 to 100 µm, the metal reflective layer comprises a metallic material and a resin, and the metallic material comprises one or more of zero-dimensional metallic particles and two-dimensional metallic particles.
[2]. The reflective sheet according to [1], wherein the zero-dimensional metallic particles are substantially spherical metallic particles; and the two-dimensional metallic particles are selected from scale-like metallic particles, disc-like metallic particles or irregular sheet-like metallic particles.
[3]. The reflective sheet according to [1] or [2], wherein the metallic material is one of aluminum, copper, silver, gold, and indium or an alloy thereof.
[4]. The reflective sheet according to any one of [1] to [3], wherein the content of the metallic material in the metal reflective layer is from 2 wt% to 90 wt%.
[5]. The reflective sheet according to any one of [1] to [4], wherein the metal reflective layer further comprises an additive, and the additive is one or more of an antioxidant, a leveling agent, a curing agent, a UV-resistant agent, a dispersant, a stabilizer, and a catalyst.
[6]. The reflective sheet according to any one of [1] to [5], wherein 20% to 90% by volume of the retroreflective structural layer is embedded into the focus-forming layer.
[7]. The reflective sheet according to any one of [1] to [6], wherein the metal reflective layer further comprises an adhesive layer on a side away from the focus-forming layer.
[8]. The reflective sheet according to any one of [1] to [7], wherein
   the reflective sheet has a coefficient of retroreflection of 15 cd/(lx·m²) or more in a case of an observation angle of 0.2° and an incident angle of 5°.
[9]. The reflective sheet according to any one of [1] to [8], wherein
   the reflective sheet has an RFID signal sensitivity of -17 dBm or less at a frequency ranging from 920 MHz to 925 MHz.
[10]. The reflective sheet according to any one of [1] to [9], wherein
   a bidirectional transmission loss of millimeter-wave radar of the reflective sheet is 5 dB or less at a frequency ranging from 76 to 81 GHz.

### Advantageous Effects of the Invention

By implementing the above embodiments, the present invention is capable of achieving the following technical effects.
1) By adjusting the thickness of the metal reflective layer and the shape and content of its metallic particles, the present invention enables the reflective sheet to possess reflective properties in the absence of an aluminum-plated layer and enables the metal reflective layer not to shield signals (the signal frequency may range from 30 MHz to 300 GHz), thus being capable of obtaining a reflective sheet that balances the penetrability of RFID signals and millimeter-wave radar signals and the retroreflective performance, while maintaining high RFID signal sensitivity, high retention rate of coefficient of retroreflection and low bidirectional transmission loss of millimeter-wave radar; and
2) the reflective sheet of the present invention is simple in structure and easy to manufacture, which is conducive to large-scale and rapid production.

### BRIEF DESCRIPTION OF THE DRAWINGS

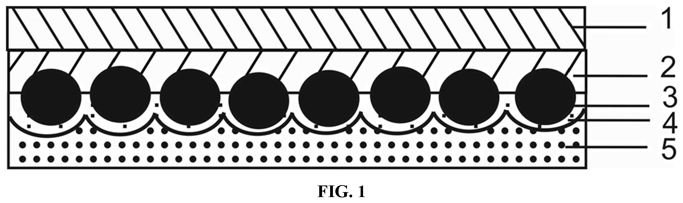

FIG. 1 is a schematic structural view for a reflective sheet according to one embodiment of the present invention.
1: transparent protective layer
2: transparent resin layer
3: retroreflective structural layer
4: focus-forming layer
5: metal reflective layer

### DETAILED DESCRIPTION

The contents of the present invention are described in detail below. The description of the technical features described below is based on the representative embodiments and specific examples of the present invention, but the present invention is not limited to these embodiments and specific examples. The following contents should be noted.

In the present specification, the numerical range indicated by using "numerical value A to numerical value B" refers to a range including the endpoint values A and B.

In the present specification, the numerical range indicated by using "or more" or "or less" refers to a numerical range including the number itself.

In the present specification, the meaning indicated by using "may" involves both the meaning of conducting a certain treatment and the meaning of not conducting a certain treatment.

In the present specification, the "normal temperature" or "room temperature" as used refers to an indoor ambient temperature at "23°C ± 2°C".

In the present specification, the units as used are all international standard units, and the symbol "%" as used refers always to weight percentage content or mass percentage content, unless otherwise specified.

In the present specification, "basically" or "substantially" is used to indicate that the standard deviation from the theoretical model, theoretical data or target data is within a numerical range of 2%, preferably 1% and more preferably 0.8%.

In the present specification, the terms "comprising" and/or "including", when used, indicates the existence of features, steps, operations, devices, components and/or combinations thereof.

In the present specification, references to "some specific/preferred embodiments", "some other specific/preferred embodiments", "embodiments" and the like mean that particular elements as described (for example, features, structures, properties and/or characteristics) in relation to this embodiment are included in at least one of the embodiments described here and may or may not exist in other embodiments. Additionally, it should be understood that said elements may be combined in any suitable manner in various embodiments.

Referring to FIG. 1, it shows a multilayer structure of a reflective sheet according to one specific embodiment of the present invention. That is, this reflective sheet sequentially comprises, from top to bottom, the following structural layers: a transparent protective layer, a transparent resin layer, a retroreflective structural layer, a focus-forming layer, and a metal reflective layer.

### (Transparent Protective Layer)

In the present invention, the type and thickness of the transparent protective layer are not particularly limited in principle, and may be set with reference to the types and thicknesses of the protective layers on the surface layers of conventional reflective sheets in this field.

In some specific embodiments, the material usable for the transparent protective layer may be at least one selected from acrylic resin, alkyd resin, fluororesin, polyolefin resin, polyester resin, polyurethane resin, and polycarbonate. In consideration of weather resistance and processability, at least one of acrylic resin, polyolefin resin and polyester resin is preferred.

### Acrylate resin may be a polymer of one or more (meth)acrylates.

Polyolefin resin may be a homopolymer of olefin, a copolymer of multiple olefins, or a copolymer of an olefin and an additional polymerizable monomer, such as ethylene-vinyl acetate copolymer.

Polyester resin may be a condensate of an aliphatic, aromatic or alicyclic diol and a diacid, and preferably, may be selected from polyethylene terephthalate (PET), polybutylene terephthalate (PBT), etc.

In some other specific embodiments, the resin in the transparent protective layer may be added with a colored pigment or a dye, and the pigment and the dye are preferably transparent pigments. Pigment- or dye-based colorants may be set forth as below:
yellow: colorants such as isoindolinone-, isoindoline-, quinophthalone-, anthraquinone-, pyrazolone-, flavanthrone-, benzimidazolone-, and azo nickel-based colorants;
red: colorants such as anthraquinone-, perylene-, quinacridone-, and indigo-based colorants;
blue: colorants such as phthalocyanine-, onium reductive dyeing-, anthraquinone-, and cobalt-based colorants;
green: colorants such as phthalocyanine-, emerald green-, chromium oxide-, and cadmium-based colorants;
tawny: iron oxide red-based colorants, or a combination of an isoindolinone-based yellow colorant, a perylene-based red colorant, and a phthalocyanine-based blue colorant;
orange: monochromatic colorants including anthraquinone-, pyrazolone-, perinone-, perylene-, and quinacridone-based colorants, or a combination of an isoindolinone-based yellow colorant and a perylene-based red colorant;
white: colorants such as phthaline-, zinc-, and lead-based colorants;
black: colorants such as carbon black-, aniline black-, perylene black-, and titanium black-based colorants.

Furthermore, in some specific embodiments, the thickness of the transparent protective layer may be from 10 µm to 150 µm, preferably from 30 µm to 120 µm, more preferably from 50 µm to 100 µm, and further preferably from 30 µm to 60 µm.

### (Transparent Resin Layer)

The material and thickness of the transparent resin layer of the present invention are not particularly limited in principle, and may be set with reference to the types and thicknesses of conventional transparent resin layers in this field.

The resin in the transparent resin layer may be at least one selected from acrylic resin, alkyd resin, fluororesin, vinyl chloride resin, polyester resin, polyurethane resin, and polycarbonate. At least one of acrylic resin, polyester resin and vinyl chloride resin is preferred in consideration of weather resistance and processability, while acrylic resin is preferred in consideration of the suitability for coloring or the dispersibility at the time of coloring with a colorant.

Likewise, the transparent resin layer may contain the same colored pigment or dye as that in the transparent protective layer.

### (Retroreflective Structural Layer)

The retroreflective structural layer of the present invention may be a lens array layer formed of light-transmitting microbeads or prisms, and the lens array layer is at least partially embedded into the focus-forming layer.

Moreover, the lens array layer of the present invention utilizes the principle of light retroreflection, which can greatly enhance the brightness of the target object observed from the light source perspective as compared to diffuse reflection and specular reflection.

Furthermore, the retroreflective structural layer is a lens array. The lens units are of any shape and have a refractive function, such as light-transmitting microbeads or prisms. In some specific embodiments, the light-transmitting microbeads therein may be spherical, or may be rodlike, ellipsoidal or any combination thereof. In some other specific embodiments, the prisms are serrated (triangular) prisms.

The material of the microbeads or prisms is composed of at least one of glass, ceramics, polymers, and minerals. In some preferred embodiments, their refractive index may be 1.7 to 2.5, and more preferably 2.19 to 2.21; the (long) diameter of the microbead is 10 µm to 150 µm, preferably 50 µm to 110 µm, and more preferably 60 µm to 110 µm.

In some preferred embodiments of the present invention, the lens array layer is a single-layer planar array formed by the light-transmitting microbeads; all the light-transmitting microbeads in the lens array layer are of the same shape and the geometric center points of all the light-transmitting microbeads are located in one plane.

In some other preferred embodiments of the present invention, 20% to 90% by volume, preferably 60% to 80% by volume of the lens array layer is embedded into the focus-forming layer described below. In a specific embodiment, part of the lens array layer is filled in the focus-forming layer. When the incident light enters the microbeads and is then reflected from the transparent resin layer on the side of the microbeads, it returns along the original path by virtue of the lens array principle.

Therefore, when the reflective sheet of the present invention is photographed and light is incident thereon, the contrast would be rather distinct compared to the characters of the license plate and other regions without a lens array.

### (Focus-Forming Layer)

The material and structure of the focus-forming layer of the present invention are not particularly limited in principle. It is mainly used to focus reflected light to visually improve the clarity of the reflective surface.

The material of the focus-forming layer may include a transparent resin. The transparent resin may be at least one selected from acrylic resin, alkyd resin, fluororesin, vinyl chloride resin, polyester resin, polyurethane resin, and polycarbonate. In consideration of weather resistance and processability, at least one of acrylic resin, polyester resin and vinyl chloride resin is preferred, and acrylic resin is more preferred. Additionally, the focus-forming layer may optionally be colored.

In addition, from the standpoint of imparting focusing characteristics, there is a continuously undulant curved surface structure at the interface between the focus-forming layer and the metal reflective layer described below, and such a curved surface provides a focusing effect via a structure concave toward the metal reflective layer.

### (Metal Reflective Layer)

It is well-known that in the prior art, metal is the most preferable material for the reflective layer, since metal has higher reflective performance as compared to other materials. Although some metals (such as indium) have a reflective effect, their cost is prohibitively high. The high cost stems from the fact that indium is much more expensive than aluminum, and the evaporation speed of indium is slower than that of aluminum. Generally, the fastest evaporation speed of aluminum may be 300 m/min, while the evaporation speed of indium is only a few meters per minute. In the existing studies, however, the metal reflective layers formed by metal evaporation would cause pronounced signal shielding even with a thickness of merely 50 to 1000 Å.

Therefore, the metal reflective layer of the present invention is not required to be formed by metal evaporation, instead, a composite layer containing a metallic material and a resin is used as the metal reflective layer. Since the metallic material is granular and has voids, it is advantageous to improve the signal penetrability.

The metal reflective layer of the present invention can assist the retroreflective structural layer to achieve good light reflection efficiency. In some specific embodiments, the metal reflective layer contains a metallic material and a resin.

Unlike conventional reflective layers formed by metal evaporation (covering the entire surface), which would cause significant signal shielding, the present invention proposes the following solution.

A reflective layer is formed by a composite layer containing a metallic material and a resin, wherein a zero-dimensional or two-dimensional metallic material is used as the metallic material. Using such metallic materials could not only provide good light reflection effect, but also could allow signals to be emitted from the metal reflective layer.

Moreover, compared with one-dimensional metallic materials, the zero-dimensional metallic materials have better dispersibility and good reflection uniformity, and the two-dimensional metallic materials have good directional alignment during coating and thus have more excellent light reflectivity.

In the present invention, the type and thickness of the metallic material are not particularly limited in principle. For example, the metallic material may be at least one selected from aluminum, copper, silver, gold, and indium. When the metallic material is two or more of the above respective metals, the metallic material is an alloy of the above respective metals. In some specific embodiments, the metal therein may be granular, or may be disc-like, scale-like or other irregular sheet-like, or any combination thereof. Most preferably, one or a combination of more of the two-dimensional metallic materials described above may be used in the metal reflective layer of the present invention. For these two-dimensional metallic materials, their length (the longest distance in the plane) may be from 0.1 µm to 50 µm, for example, 0.5 µm, 1 µm, 3 µm, 5 µm, 10 µm, 20 µm, 30 µm, 40 µm, 45 µm or the like; and the thickness may be from 0.0001 µm to 50 µm, for example, 0.001 µm, 0.01 µm, 0.1 µm, 1 µm, 5 µm, 10 µm, 20 µm, 30 µm, 40 µm, 45 µm or the like. Additionally, the particle size of usable zero-dimensional metallic materials may be from 0.1 µm to 50 µm, for example, 0.5 µm, 1 µm, 3 µm, 5 µm, 10 µm, 20 µm, 30 µm, 40 µm, 45 µm or the like.

The resin in the metal reflective layer may include a transparent resin, and the transparent resin may be at least one selected from acrylic resin, polyester resin, polycarbonate resin, vinyl chloride resin, polystyrene resin, polyolefin resin, fluororesin, cyclic olefin resin, silicone resin, and polyurethane resin, or a combination thereof, and at least one of acrylic resin, polycarbonate resin, vinyl chloride resin and polyurethane resin is preferred in consideration of the weather resistance and transparency.

In some preferred embodiments, at least one of an antioxidant, a leveling agent, a curing agent, a UV-resistant agent, a dispersant, a stabilizer and a catalyst may further be added to the metal reflective layer, and it is most preferable to add any two or more thereof in consideration of secondary oxidation. Different additives are selected depending on the material of the resin to prevent oxidation and yellowing.

Furthermore, without affecting the technical effects of the present invention, in order to increase the whiteness of the color of the metal reflective layer, it is also possible to add an inorganic dye or pigment (*e.g.* titanium dioxide) to the metal reflective layer.

In some preferred embodiments, in the metal reflective layer, the content of the metallic material is from 2 wt% to 90 wt%, preferably from 2 wt% to 70 wt%, and more preferably from 3 wt% to 50 wt%; and the content of the resin is from 5 wt% to 97 wt%, preferably from 10 wt% to 90 wt%, and more preferably from 30 wt% to 85 wt%.

Furthermore, the thickness of the metal reflective layer and the content of the metallic material tend to have an inversely proportional influence on signal shielding. That is, when the thickness of the metal reflective layer increases, the signal shielding can be maintained unchanged by reducing the content of the metallic material. In the case of keeping the content of the metallic material constant, the thickness of the metal reflective layer and the coefficient of retroreflection of the reflective sheet tend to be proportional. That is, when the thickness of the metal reflective layer increases, the coefficient of retroreflection of the reflective sheet also increases. In some specific embodiments, the thickness of the metal reflective layer may be from 0.5 µm to 100 µm, preferably from 1 µm to 60 µm, and more preferably from 1 µm to 40 µm.

In a specific embodiment, the metal reflective layer may be formed by such a process as blade coating, roll coating or slot die coating.

### (Adhesive Layer)

In the present invention, an adhesive layer may be further provided on the surface of the metal reflective layer on the side opposite to the retroreflective structural layer.

The material of such an adhesive layer is not particularly limited. Pressure-sensitive adhesives, such as acrylic-based adhesives, commonly used in this field may be used. In addition, the adhesive layer may also be a layer formed of a hot melt adhesive.

In the case of using a pressure-sensitive adhesive, a release material may also be provided on the side of the surface of the pressure-sensitive adhesive. The release material may be paper or may also be films such as PET or CPP. In addition, the thickness of the pressure-sensitive adhesive may be from 10 µm to 150 µm, preferably from 20 µm to 60 µm, and more preferably from 30 µm to 50 µm.

The hot melt adhesive may be a PA hot melt adhesive, a TPU hot melt adhesive, an EVA hot melt adhesive, or a PES hot melt adhesive. The thickness of the hot melt adhesive may be from 1 µm to 150 µm, preferably from 3 µm to 40 µm, and more preferably from 6 µm to 30 µm.

In the reflective sheet described above, if the adhesive layer is a pressure-sensitive adhesive film, it may be directly adhered to the material. If the adhesive layer is a hot melt adhesive, it may be used for injection molding, hot stamping or in-mold labeling.

The reflective sheet of the present invention has good RFID signal and millimeter-wave radar signal transmission performance and retroreflection performance. In some specific embodiments of the present invention, the reflective sheet has a coefficient of retroreflection of 15 cd/(lx·m²) or more in a case of an observation angle of 0.2° and an incident angle of 5°. In some specific embodiments of the present invention, the RFID signal sensitivity is -17 dBm or less at a frequency ranging from 920 MHz to 925 MHz. In some specific embodiments of the present invention, the bidirectional transmission loss of millimeter-wave radar is 5 dB or less and preferably 3 dB or less at a frequency ranging from 76 to 81 GHz.

The reflective sheet of the present invention has wider range of application scenarios. It is not only suitable for use in various vehicles, such as for use in various motor or non-motor vehicle license plates, labels and certificates that are amenable to electric signal identification and visual recognition, but also suitable for use in automobile decorations, such as automobile stickers.

### Examples

The embodiments of the present invention will be described in detail below with reference to the examples. However, a person skilled in the art shall appreciate that the following examples are merely intended to illustrate the present invention and shall not be regarded as limiting the scope of the present invention. Where no specific conditions are specified in the examples, conventional conditions or those recommended by manufacturers are followed. Where manufacturers are not specified for the reagents or instruments as used, all of them are commercially-available conventional products.

### Example 1:

As shown in FIG. 1, 100 parts by weight of an acrylic resin solution (trade name: RS-1200, NIPPON CARBIDE INDUSTRIES (HANGZHOU) CO., LTD.), 14 parts by weight of methylated melamine resin solution (trade name: NIKALAC MS-11, SANWA CHEMICAL CO., LTD.), 1.5 parts by weight of ultraviolet absorber (trade name: Seesorb 103, SHIPRO KASEIKAISHA CO., LTD.), and 16.7 parts by weight of solvent (MIBK/toluene=8/2) were mixed and stirred to prepare a resin compounding solution for forming a transparent protective layer. This resin compounding solution was coated onto an engineering substrate film and dried to form a transparent protective layer with a thickness of approximately 36 µm. Teijin Group's transparent polyethylene terephthalate film with a thickness of 75 µm (trade name: Tetoron Film S-75, Teijin Group) was used as the engineering substrate film.

100 parts by weight of acrylic resin (trade name: RS-3000, NIPPON CARBIDE INDUSTRIES (HANGZHOU) CO., LTD.), 22 parts by weight of color masterbatch (trade name: AR-6300, TOKUSHIKI Co., Ltd.), 13.6 parts by weight of isocyanate-based crosslinking agent (trade name: Sumijoule N-75, Sumika Bayer Urethane Co., Ltd.), and 20 parts by weight of toluene and 10 parts by weight of methyl isobutyl ketone (MIBK) as solvents were mixed and stirred to prepare a resin compounding solution for forming a transparent resin layer. Subsequently, this resin compounding solution was coated onto the transparent protective layer, and then dried at 100°C for 5 min to form a transparent resin layer with a thickness of approximately 13 µm.

Glass microspheres (trade name: NB-23S, NIPPON CARBIDE INDUSTRIES (HANGZHOU) CO., LTD.) were attached to the above transparent resin layer, and heat treatment was conducted at 145°C for 3.5 min. The glass microspheres were embedded in the transparent resin layer in such a manner that the glass microspheres were exposed from the transparent resin layer, and approximately 75% of the diameter of the glass microspheres was retained within the transparent resin layer.

100 parts by weight of acrylic resin solution (trade name: RS-5000, NIPPON CARBIDE INDUSTRIES (HANGZHOU) CO., LTD.), 5.5 parts by weight of methylated melamine resin solution (trade name: NIKALAC MS-11, SANWA CHEMICAL CO., LTD.), and 39.3 parts by weight of solvent (MIBK/toluene=4/6) were mixed and stirred to prepare a resin compounding solution for a focus-forming layer. This resin compounding solution was coated onto the transparent resin layer and glass microspheres and dried to form a focus-forming layer with an average thickness of approximately 23 µm.

100 parts by weight of acrylic resin, 5 parts by weight of metallic material, and 10 parts by weight of toluene and 10 parts by weight of MIBK as solvents were mixed and stirred to form a resin compounding solution for a reflective layer. This resin compounding solution was coated onto the focus-forming layer and dried to form a metal reflective layer with an average thickness of approximately 1 µm. The metallic material was aluminum-silver paste (the aluminum sheet was of a scale-like shape and 20 µm in length).

100 parts of acrylic resin, 3 parts of isocyanate and 5 parts of EAC were mixed and stirred to prepare an adhesive component. The adhesive component was coated onto release paper to form an adhesive layer of about 40 µm, and the adhesive layer was bonded to the above metal reflective layer with a laminating machine to form a reflective material for a reflective license plate.

### Example 2:

A reflective material was obtained in the same way as in Example 1, except that the metallic material was 50 parts by weight.

### Example 3:

A reflective material was obtained in the same way as in Example 1, except that the metallic material was 100 parts by weight.

### Example 4:

A reflective material was obtained in the same way as in Example 1, except that the thickness of the metal reflective layer was 40 µm.

### Example 5:

A reflective material was obtained in the same way as in Example 2, except that the thickness of the metal reflective layer was 40 µm.

### Example 6:

A reflective material was obtained in the same way as in Example 3, except that the thickness of the metal reflective layer was 35 µm.

### Comparative Example 1:

A reflective material was obtained in the same way as in Example 1, except that the metal reflective layer was replaced with vacuum-deposited aluminum having a thickness of 100 Å.

### Comparative Example 2:

A reflective material was obtained in the same way as in Example 1, except that the metal reflective layer was replaced with a white reflective layer.

100 parts by weight of acrylic resin, 100 parts by weight of white pigment (trade name: DAD 100; DIC Corporation), and 20 parts by weight of toluene and 10 parts by weight of MIBK as solvents were mixed and stirred to form a resin compounding solution for a reflective layer. This resin compounding solution was coated onto the focus-forming layer and dried to form a white reflective layer with an average thickness of approximately 40 µm.

### Comparative Example 3:

A reflective material was obtained in the same way as in Example 1, except that 5 parts by weight of metallic material was replaced with equal parts by mass of acicular metal (with a length of 20 µm). A sample capable of satisfying use requirements could not be obtained owing to inhomogeneous mixing.

### Comparative Example 4:

A reflective material was obtained in the same way as in Example 1, except that the thickness of the metal reflective layer was 120 µm.

### Comparison of results:

| Groups | Coefficient of retroreflection | RFID Signal Sensitivity (dBm) | Weather Resistance | Bidirectional Transmission Loss of Millimeter-wave Radar (dB) | |
|---|---|---|---|---|---|
| | | 925MHz | | Mean value (76-77 GHz) | Mean value (76-81 GHz) |
| Ex. 1 | 15 | -17.7 | Superior | 1.29 | 1.02 |
| Ex. 2 | 30 | -17.2 | Superior | 1.38 | 1.01 |
| Ex. 3 | 50 | -17.1 | Superior | 2.37 | 2 |
| Ex. 4 | 20 | -17.3 | Superior | 0.69 | 1.09 |
| Ex. 5 | 40 | -17.3 | Superior | 0.9 | 1.26 |
| Ex. 6 | 60 | -17.1 | Superior | 1.09 | 1.55 |
| Comp. Ex. 1 | 100 | Unreadable | Superior | 51.5 | 51.5 |
| Comp. Ex. 2 | 10 | -17.7 | Superior | 0.8 | 0.9 |
| Comp. Ex. 4 | 31 | -16 | Superior | 10.52 | 11.37 |

1) The coefficient of retroreflection was tested in accordance with GA666-2018 (*Retro-reflective sheetings for license plates of motor vehicles*); the unit was Candela per Lux · square meter (cd/(lx·m²)); and the data were obtained at an observation angle of 0.2° and an incident angle of 5°.
2) The RFID signal sensitivity was data values tested in accordance with GB/T29768-2013 (Information technology - Radio frequency identification - Air interface protocol at 800/900 MHz) in the range of 920-925 MHz; and the unit was dBm.
3) Millimeter-wave radar testing equipment: QAR automotive radome tester based on the Rohde & Schwarz imaging technology; referring to the frequency range of automotive millimeter-wave radar, the bidirectional transmission loss of millimeter-wave radar signals was measured in the frequency range of 77 GHz frequency band (76-77 GHz) and 79 GHz frequency band (76-81 GHz); and the unit was dB.

It is to be noted that although the technical solutions of the present invention have been introduced with reference to specific examples, a person skilled in the art could understand that the present invention should not be limited thereto.

Each of the examples of the present invention has been described above, the above descriptions are exemplary but not exhaustive, and are not limited to each of the disclosed examples. A number of variations and modifications are apparent to those of ordinary skill in the art without departing from the scope and spirit of each of the described examples. The terms used herein are selected to be intended to best explain the principle, practical application or the improvements to the techniques on the market of each example, or to enable others of ordinary skill in the art to understand each of the examples disclosed herein.

## Claims

1. A multilayer-structured reflective sheet, wherein the reflective sheet sequentially comprises, from top to bottom, the following structural layers:
a transparent protective layer, a transparent resin layer, a retroreflective structural layer, a focus-forming layer, and a metal reflective layer,
the retroreflective structural layer is a lens array layer formed of light-transmitting microbeads or prisms, and the lens array layer is at least partially embedded into the focus-forming layer; and
the metal reflective layer has a thickness of 0.5 to 100 µm, the metal reflective layer comprises a metallic material and a resin, and the metallic material comprises one or more of zero-dimensional metallic particles and two-dimensional metallic particles.

2. The reflective sheet according to claim 1, wherein the zero-dimensional metallic particles are substantially spherical metallic particles; and the two-dimensional metallic particles are selected from scale-like metallic particles, disc-like metallic particles or irregular sheet-like metallic particles.

3. The reflective sheet according to claim 1 or 2, wherein the metallic material is one of aluminum, copper, silver, gold, and indium or an alloy thereof.

4. The reflective sheet according to any one of claims 1 to 3, wherein the content of the metallic material in the metal reflective layer is from 2 wt% to 90 wt%.

5. The reflective sheet according to any one of claims 1 to 4, wherein the metal reflective layer further comprises an additive, and the additive is one or more of an antioxidant, a leveling agent, a curing agent, a UV-resistant agent, a dispersant, a stabilizer, and a catalyst.

6. The reflective sheet according to any one of claims 1 to 5, wherein 20% to 90% by volume of the retroreflective structural layer is embedded into the focus-forming layer.

7. The reflective sheet according to any one of claims 1 to 6, wherein the metal reflective layer further comprises an adhesive layer on a side away from the focus-forming layer.

8. The reflective sheet according to any one of claims 1 to 7, wherein
the reflective sheet has a coefficient of retroreflection of 15 cd/(lx·m²) or more in a case of an observation angle of 0.2° and an incident angle of 5°.

9. The reflective sheet according to any one of claims 1 to 8, wherein
the reflective sheet has an RFID signal sensitivity of -17 dBm or less at a frequency ranging from 920 MHz to 925 MHz.

10. The reflective sheet according to any one of claims 1 to 9, wherein
a bidirectional transmission loss of millimeter-wave radar of the reflective sheet is 5 dB or less at a frequency ranging from 76 to 81 GHz.
